# EUROPEAN PATENT SPECIFICATION

(11) **EP 2 308 995 B1**
(45) Date of publication and mention of the grant of the patent: **06.05.2015**
(21) Application number: 10181257.6
(22) Date of filing: 02.03.1998
(51) Int. Cl.: C12Q 1/68, B01L 7/00, G01N 21/03, G01N 1/31

(54) **Heat exchanging, optically interrogated chemical reaction assembly**
Chemischer Reaktor mit Wärmetauscher und optischem Detektor
Réacteur chimique avec échangeur de chaleur et détecteur optique

(30) Priority: 28.02.1997 US 808325; 28.02.1997 US 808327; 28.02.1997 US 808733
(43) Date of publication of application: 13.04.2011
(62) Divisional of application: 98907683.1
(73) Proprietor: Cepheid, Sunnyvale, CA 94089 (US)
(72) Inventor: Chang, Ronald, Redwood City CA 64063 (US); Christel, Lee, A., Palo Alto CA 94306 (US); Kovacs, Gregory, T., A., Stanford CA 94305 (US); McMillan, William, A., Cupertino CA 95014 (US); Northrup, M., Allen, Fremont CA 94539 (US); Petersen, Kurt, E., San Jose CA 95148 (US); Pourahmadi, Farzad, Fremont CA 94539 (US); Young, Steven, J., Los Gatos CA 95030 (US); Yuan, Robert, Belmont CA 94002 (US)
(74) Representative: Webster, Jeremy Mark

(56) References cited:
- US-A- 5 209 904
- US-A- 5 589 136

## Description

### FIELD OF THE INVENTION

The present invention is a device useful for heating exchanging chemical processes and methods of manufacturing the device.

### BACKGROUND OF THE INVENTION

There are many applications in the chemical processing field in which it is desirable to precisely control temperature of chemicals and to induce rapid temperature transitions. In those reactions, heat is exchanged between chemicals and their environment to increase or decrease the temperature of the chemicals reacting. Thus, the term "heat exchanging" is herein intended to mean heat which may be transmitted by a heating source and absorbed by chemicals or heat released by the chemicals due to exposure to a cooling source. It is often desirable to control the temperature change in a manner which accurately attains the target temperature, avoiding under shooting or over shooting of the temperature and quickly reaches the target temperature. Such control of temperature may inhibit side reactions, the formation of unwanted bubbles, the degradation of components at certain temperatures, etc. which may occur at non-optimal temperatures. It is of further interest to be able to optically observe and monitor the chemical reaction.

Applications for heat exchanging chemical reactions may encompass organic, inorganic, biochemical and molecular reactions, and the like. In organic and inorganic reactions, chemicals may be heated to achieve the activation energy for the reaction. Examples of thermal chemical reactions include isothermal nucleic acid amplification, thermal cycling amplification, such as polymerase chain reaction (PCR), ligase chain reaction (LCR), self-sustained sequence replication, enzyme kinetic studies, homogenous ligand binding asssays, and more complex biochemical mechanistic studies that require complex temperature changes. Additionally, temperature mediated lysis of target microorganisms prior to gene amplification and detection can be accomplished by controlling temperatures and may be performed in the same reaction device as the amplification step. Temperature control systems also enable the study of certain physiologic process where a constant and accurate temperature is required.

Numerous devices and systems have been described in the art for conducting thermal transfer reactions. These devices use a variety of designs for heat transfer, such as water baths, air baths, and solid blocks such as aluminum. Chemical reactions in small reaction volumes have also been described.

Conventional instrumentation, for example, typically consists of a block of aluminum having as many as ninety-six conical reaction tubes. The aluminum block is heated and cooled either by a Peltier heating/cooling apparatus, or by a closed-loop liquid heating/cooling system, flowing through channels machined into the aluminum block. Because of the large thermal mass of the aluminum block, heating and cooling rates are limited to about 1°C/sec resulting in longer processing times. For example, in the PCR application, fifty cycles may require two or more hours to complete.

Part of the reason for the relatively large metal block is to provide enough mass to insure a constant and uniform temperature at each reaction site, as well as from site to site. Some heat transfer reaction instruments also incorporate a top-plate which is heated and cooled to ensure a uniform temperature across the top of all sample solutions. The sample inserts are tapered to maximize thermal contact between the insert and the metal block. One problem with this system is that the large thermal masses, required for temperature uniformity, take a long time (and or a large heating/cooling power source) to heat and to cool. Usual heating and cooling rate for these types of instruments are on the order of 1-3°C/second.

Typically, the highest heating rate obtainable in commercial instruments is on the order of 3°C/second, and cooling rates are significantly less. With these relatively slow heating and cooling rates, it has been observed that some processes requiring high control of temperature are inefficient. For example, reactions may occur at the intermediate temperatures, creating unwanted and interfering side products, such as in PCR "primer-dimers" or anomalous amplicons, which are deleterious to the analytical process. The low control of temperature results in over consumption of reagents necessary for the intended the reaction.

Furthermore, for some diagnostic and environmental chemical detection methodologies, the volume of the tested unknown sample can be important. For example, in the detection of viruses in blood or other bodily fluids using PCR, the detection limit is about 10 virions. Therefore, a minimum fluid volume is required depending upon the concentration of virions in the sample. By way of illustration, at a concentration of 100 virions/mL, the sample size should be at least 0.1 mL; for more dilute samples, even larger sample volumes are necessary. Therefore, the chemical analysis system must be designed to handle a wide range of fluid volumes, from nanoliters to milliliters.

Another fundamental element of the many chemical reactions is monitoring of the chemical process and detection of the resulting product. Real-time monitoring of the process as it is occurring allows for accurate and quantitative data to determine the progress of the reaction and adjust the heating/cooling parameters accordingly. Where multiple cycles are conducted, the process may be monitored after each thermal cycle. After the reaction is complete, the product must be determined. In some processes, the product is separated prior to detection.

A preferred detection technique for the analysis is optical interrogation, typically using fluorescence, photosynthesis or chemiluminescence. For ligand-binding assays, time-resolved fluorescence and fluorescence polarization are often used. Optimum optical sensitivity in fluid solutions can be attained by maximizing the optical sampling path-length of both the light beams exciting the chemical molecules and the emitted light that will be detected to generate the optical signal.

The control of heating and cooling changes may be referred to as thermal cycling. The term "thermal cycling" is herein intended to mean at least one change of temperature, i.e. increase or decrease of temperature, in the environment to which chemicals are exposed. Therefore, chemicals undergoing thermal cycling may shift from one temperature to another and then stabilize at that temperature, transition to a second temperature or return to the starting temperature. The temperature cycle may be performed once or repeated as many times as required by the particular chemical reaction. The various chemical reactions occurring during these temperature cycles are more specific and more efficient when the temperature is raised and lowered to the various required reaction temperatures as quickly as possible and controlled very precisely.

### Conventional Devices for Controlling Enzyme-Mediated Reactions

Devices which control the transfer of heat for chemical reactions are applicable for synthesis reactions such as thermal cycling PCR to amplify a segment of nucleic. In this methodology, a DNA template is used with a thermostable DNA polymerase, e.g., Taq DNA polymerase, nucleoside triphosphates, and two oligonucleotides with different sequences, complementary to sequences that lie on opposite strands of the template DNA and which flank the segment of DNA that is to be amplified ("primers"). The reaction components are cycled between a higher temperature (e.g., 95°C) for dehybridizing double stranded template DNA, followed by lower temperatures (40-60°C for annealing of primers and 70-75°C for polymerization). Repeated cycling among dehybridization, annealing and polymerization temperatures provides exponential amplification of the template DNA. For example, up to 1 µg of target DNA up to 2 kb in length can be obtained with 30-35 cycles of amplification from only 10-⁶ µg of starting DNA.

Polynucleotide amplification has been applied to the diagnosis of genetic disorders,;the detection of nucleic acid sequences of pathogenic organisms in a variety of samples including blood, tissue, environmental, air borne, and the like; the genetic identification of a variety of samples including forensic, agricultural, veterinarian, and the like; the analysis of mutations in activated oncogenes, detection of contaminants in samples such as food; and in many other aspects of molecular biology. Polynucleotide amplification assays can be used in a wide range of applications such as the generation of specific sequences of cloned double-stranded DNA for use as probes, the generation of probes specific for uncloned genes by selective amplification of particular segments of cDNA, the generation of libraries of cDNA from small amounts of mRNA, the generation of large amounts of DNA for sequencing and the analysis of mutations. Instruments for performing automated PCR chain reactions via thermal cycling are commercially available.

Some of the instrumentation suitable for newer processes, requiring "real-time" optical analysis after each thermal cycle, has only recently become available. For example, the Perkin Elmer (PE) 7700 (ATC) instrument as well as the PE 9600 thermal cycler are based on a 96-well aluminum block format, as described *supra,* and thus are limited by slow heating and cooling steps and complicated optics. Optical fluorescence detection in the PE 7700 is accomplished by guiding an optical fiber to each of the ninety-six reaction sites. A central high power laser sequentially excites each reaction tube and captures the fluorescence signal through the optical fiber. Since all the reaction sites are sequentially excited by a single laser and fluorescence is detected by a single spectrometer and photomultiplier tube, complex beam-guiding and optical multiplexing are required.

An instrument from Idaho Technologies monitors each reaction tube in sequence as capillary sample carriers are rotated past heating and cooling sites and optical interrogation sites. This instrument is much simpler that the ATC, however, it is not easily configured for commercial, high throughput PCR diagnostic applications.

A third real-time PCR analysis system is the MATCI device developed by Dr. Allen Northrup et al., as disclosed in U.S. Patent No. 5,589,136, incorporated herein by reference. This device uses a modular approach to PCR thermal cycling and optical analysis. Each reaction is performed in its own thermal sleeve and each sleeve has its own associated optical excitation source and fluorescence detector. Using a new generation of blue LED's, simple optics and solid-state detectors, real-time data can be obtained from a compact, low-power module. Not only are the optics simple and efficient, but the low thermal mass of the thermal cycling sleeve allows the MATCI device to realize extremely fast thermal heating and cooling rates, up to 30°C/sec heating and 5°C/sec cooling.

However, disadvantages to this MATCI device is in its use of a high thermal conductivity micromachined silicon holder, incorporating a heating element directly deposited on the silicon micromachined chip. Two drawbacks of this device are that the brittle silicon chip may crack and chip, and there is difficulty in micromachining a silicon chip such that a heater can precisely accept a tapered molded plastic insert for optimized thermal contact with the heating element itself.

For the reasons stated above, optimization of many biochemical reaction processes, including the PCR process, require that the desired reaction temperatures be reached as quickly as possible, spending minimal time at intermediate temperatures. Therefore, the heating and cooling system in which the sample reacts should be designed to optimize heating and cooling rates. It is also desirable that such a system is adapted to permit real time optical interrogation and to accept various sizes of samples.

### SUMMARY OF THE INVENTION

The invention provides a reaction vessel as set out in claim 1. A reation vessel such as defined in the preamble of claim 1 is known from US-A-5589136.

Also described herein is an assembly for controlling and performing heat exchanged chemical reactions. The assembly is designed for optimal thermal transfer to or from a samply and efficient optical viewing of a chemical reaction with the sample.

The assembly has a heat exchanging chamber adapted to receive a sample. The chamber has a housing comprising: a rigid support; a reservoir which is adapted to receive the sample; and a thin flexible structure defining at least a portion of the reservoir and coupled to said rigid support. The flexible structure is conformable to the surface of an external heating element to contact the external heating element surface for optimal thermal conduction. A sealable port is present for introducing the sample into the reservoir.

In the chemical chamber, two opposing major faces are joined by a plurality of contiguous minor faces to form an enclosed chamber in which the ratio of the thermal conductance of the major faces to that of the minor faces is at least about 2:1. Two of the minor faces are offset at an angle and are adapted to transmit light. The chamber includes a port for introducing a sample into said chamber and a seal.

The assembly further includes a thermal sleeve having a slot for introducing a sample vessel, such as the heat exchanging vessel, into the sleeve, a heating element integrated with a wall of the sleeve, a contact surface on the wall for abutting with a portion of the sample vessel, where the vessel is present; and an electrical connection for applying current to the heating element.

Further to the thermal sleeve, biasing elements may be present on wall of the sleeve to press the contract surface against a portion of the sample vessel.

The walls may be opposing parallel plates and the sample vessel is placed between said plates.

Additionally, an instrument is for controlling the temperature changes of a sample and viewing the housing. The instrument has a housing comprising an electrical connection, a cooling source, a processing area adapted to receive a thermal sleeve, and an optics assembly in optical communication with the sleeve, where the sleeve is inserted into the assembly; and a circuit board for controlling the optics assembly and for collecting the output signal of the optics assembly.

Preferably there are a plurality of housings and associated modules positioned onto a support, each of which may be independently controlled for heating and/or cooling. A controller board monitors and controls the heat exchange and collects and analyzes data.

### BRIEF DESCRIPTION OF THE DRAWINGS

Figure 1 shows a partially exploded perspective view of a heat exchanging reaction chamber, wherein the reaction portion side walls are removed and the interior reaction portion is shown and wherein a sample port is unsealed by an attached cap.
Figures 2a, b show schematic perspective views of a heat exchanging module with a chamber associated with a thermal sleeve according to the present invention, wherein Figure 2a shows the module prior to biasing the sleeve against the inserted chamber and Figure 2b shows the module after the sleeve is made to bias against the chamber.
Figure 3 shows a top view of a reaction chamber inserted in a thermal sleeve with heating element and external cooling unit.
Figures 4a, b, c, d show various schematic perspective views of another chemical reaction chamber according to the present invention with major and minor faces angled to optimize optical viewing, wherein and Figure 4a shows a side view of the chamber, Figure 4b shows a front view of the external surfaces of the chamber, Figure 4c shows a front view of the interior of a chemical reaction chamber with a sample channel leading to the reservoir, Figure 4d shows a top view of the chamber.
Figure 5 shows a perspective side view of a reaction chamber with integral lenses for optical detection and in associated arrangement with an external light emitting source and detector.
Figure 6 shows a perspective view of a thermal sleeve with one heating plate attached to a support and for illustration purposes the other plate is removed from the support.
Figure 7 shows a perspective view of another heat exchanging assembly with a chamber inserted in a thermal sleeve.
Figure 8a, b, c, d show various heating and cooling configurations of a thermal sleeve according to the present invention, wherein Figure 8a is a top view of the heating and cooling elements of the sleeve, Figure 8b is a front view of the cooling elements shown in Figure 8a, Figure 8c is a front view of another sleeve with heating and cooling elements and Figure 8d is a side view of the sleeve shown in Figure 8c.
Figure 9 shows a perspective view of a controlled heat exchanging instrument with thermal sleeve, optics assembly coupled to circuit boards and cooling unit and a reaction vessel exploded from the instrument.
Figure 10a, b show perspective views of a heat exchange assembly according to the present invention including instrument with optics assembly and cooling unit, wherein Figure 10a shows a front view of such an assembly and Figure 10b shows a side view of such an assembly.
Figure 11a, b and c show a perspective view of a cluster of heat exchanging assembly units on a base support according to the present invention, wherein Figure 11a shows four units interfacing with a main controller board, Figure 11b shows one of the units in Figure 11a in pneumatic and electrical communication with a base support and Figure 11c shows eight units each interfacing individual and separate controller boards.

### DETAILED DESCRIPTION OF THE INVENTION

In general, this invention provides a low thermal mass mechanical heating and cooling assembly which is adapted for rapid heating and/or cooling of chemical solutions to perform reactions and for efficient detection of the reaction products. The low thermal mass of the system ensures rapid heating and cooling since there is little material to heat and cool and because there is a high surface to volume ratio for thermal transfer. Those skilled in the art have only recently appreciated that rapid cooling and heating improves efficiency and decreases the amount of extraneous undesirable reactions, and that certain reactions, could be performed with high thermal exchange rates. However, no device has been capable of efficient and independent thermal exchange as well as detection in each of the device units until the current invention.

The objectives of the invention are to greatly increase thermal exchange rates in chemical processes, such as PCR (up to 10X faster heating and cooling rates), to optimize temperature uniformity of the reactants, to accommodate high thermal expansion coefficients to minimize thermal-induced mechanical stress; maximize optical excitation efficiency (long optical pathlength), to maximize optical detection sensitivity (maximize photon collection volume), to maximize fault detection capability, to minimize computer overhead of the host instrument, and to minimize overall power consumption of the instrument via independent, modular, intelligent reaction chambers supported by a powerful instrument platform and technology for long term versatility.

The objectives of the invention are attained via a self-contained cooling and heating reaction assembly with optics. Each controlled heat exchanging assembly constitutes a single reaction site. Overall, the assembly unit comprises (a) a reaction chamber which is compatible with a heating element; (b) a thermal sleeve having integral heater or cooling elements wherein a portion of the reaction chamber surface makes intimate contact with a surface of the sleeve; and (c) an instrument for housing the sleeve having an optical assembly incorporating solid-state excitation and detection sources and a cooling system. The instrument also has one or multiple circuit boards with microcontrollers for monitoring control of light excitation source and detection source and communicate with a host. The thermal exchange assembly may additionally have a support with a main controller board which communicates with the instrument, sleeve and reaction chamber to control procedures such as for temperature and optical control wherein each instrument ma be separately controlled or the cluster of instruments may be under a single set of controls;conduct self-diagnostic protocols; and receipt, storage and processing of data.

### Heat Exchanging Chamber

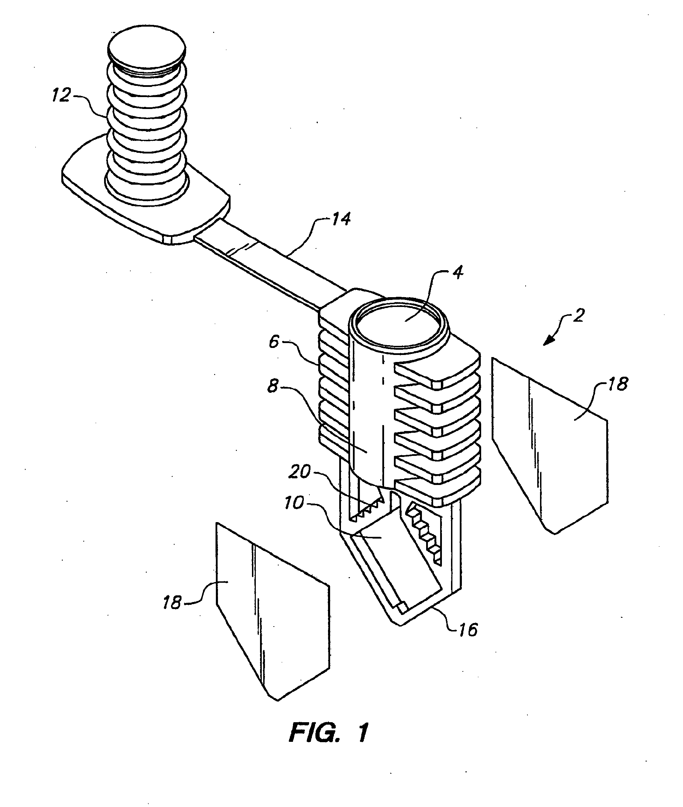

Figure 1 shows the interior of a heat exchanging reaction chamber which is adapted to receive a sample for chemical reacting. The chamber is designed for optimal thermal conductance and efficient optical viewing of the sample. The thin shape contributes to optimal thermal kinetics by providing large surfaces for thermal conduction and surfaces are adapted to make intimate contact with temperature regulating elements. In addition, the minor or major walls may provide windows into the chamber such that the entire reaction sample can be optically interrogated. In addition, the chamber is suitable for a wide range of reaction volumes.

In more detail to the components shown in exemplary embodiment in Figure 1, a chemical chamber (2) has a port (4) which is in fluidic communication with a housing (6) having channel (8) connecting the port to a reservoir (10). A seal cap (12) is attached to housing (6) by a flexible arm (14) and is adapted to cover the port (4) sealing it close. The cap (12) is insertable into the port (4) to engage channel (8). A rigid support frame (16) and thin flexible walls (18) shown in Figure 1 exploded from the chamber, both define the reservoir (10), wherein the flexible walls are coupled to the frame. On the rigid support are reflective faces (20) which bounce back light transmitted from the reservoir allowing for increased detection of signal.

In using the chamber, a sample added to port (4) flows through channel (8) and into reservoir (10). In the reservoir (10) the sample is introduced to chemicals for reacting. The walls of the reservoir is made to press against a heating or cooling element. Preferably, the walls conform to the element surface. The sample is exposed to variations in temperature by activating the heating/cooling element. The reaction and/ or reaction products are optically viewed.

The thin flexible structure (18) which defines at least a portion of the reservoir, facilitates optimal thermal conductance to the chemicals contained in the reservoir. The flexible nature of the walls (18) allow for maximum contact with a heating or cooling source. The structure is typically conformable to the surface of an external thermal element such that the surface of the flexible structure may adapt to the shape of the external heating/cooling element surface in a manner that avoids or minimizes gaps between the two surfaces. Furthermore, the flexible wall continues to conform to the thermal surface as the surface shape may change during the course of the heat exchanging operation. For example, as the heating element expands due to the increased temperature, the chamber wall will also expand to maintain optimal contact with the heating element. Also, if the walls expand due to an increase of internal pressure within the reservoir, the walls do not become rigid, but remain conformed to the heating or cooling surface. Contact may be made by biasing the thermal source against the walls and/or by pressing the walls against the thermal surface.

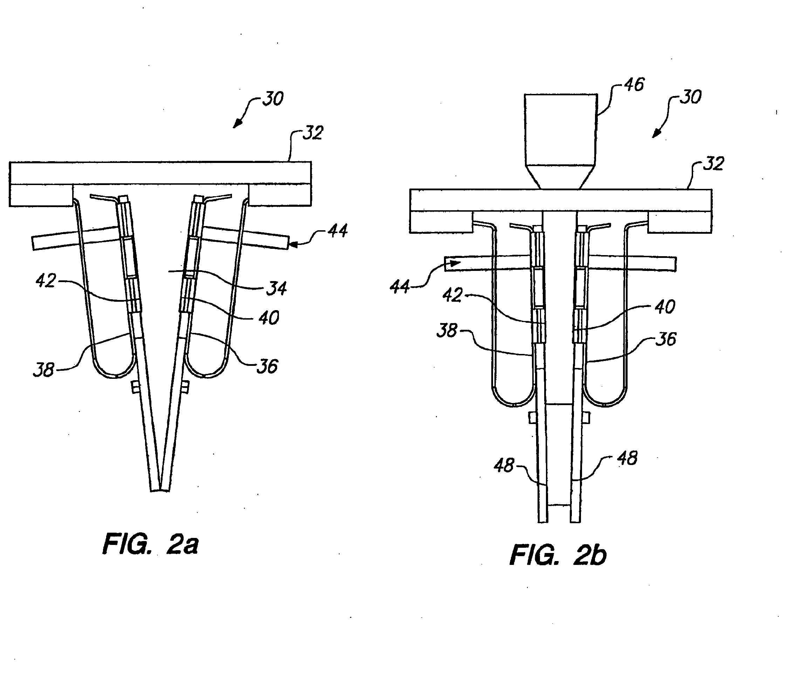

Figures 2a and 2b demonstrate the contact one chemical chamber makes with a thermal sleeve to form a heat exchanging module (30). In Figure 2a, thermal sleeve (32) with heating or cooling plates (36), (38) are in a relaxed position with opening (34) between the plates. However, as depicted in Figure 2b, when chamber (46) with flexible walls (48) is inserted in the opening between two angled heating or cooling plates (36), (38), the plate surfaces (40), (42) fully engage the chamber walls (48). In this activated position, minimal or no gaps are found between the plate surfaces and chamber surfaces. The plates (36), (38) are made to bias against the chamber walls (48) by springs (44). In the alternative, the chamber is made to press against the thermal plates. The conformable chamber walls mold to the angled shape of the heating surface to provide maximum thermal contact between surfaces.

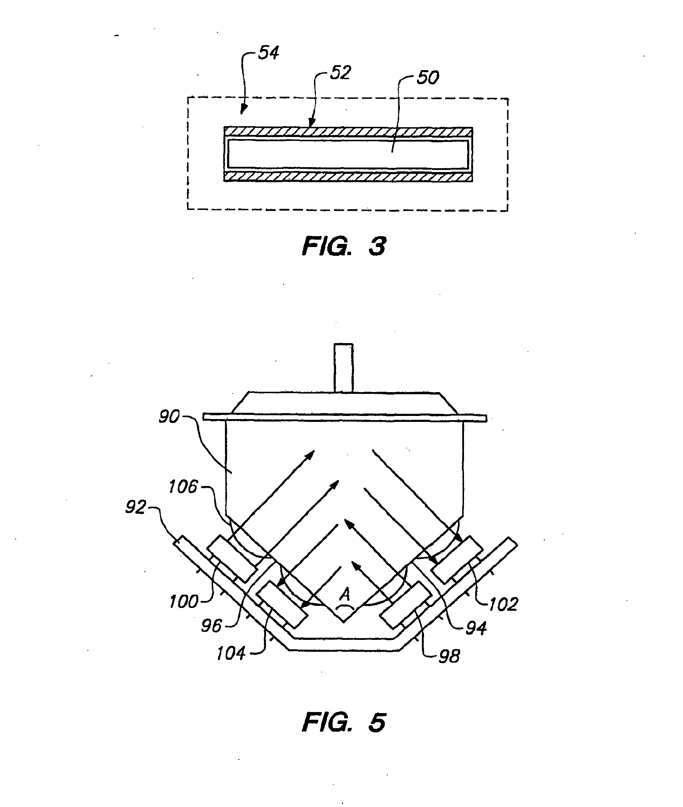

Further to the ability of the chamber to optimize thermal kinetics, the flexible wall is of low thermal mass to permit rapid temperature transfer. The thin walls of the chamber also promote transfer of both hot and cool temperatures to the reservoir. In Figure 3, the top view of a reaction chamber (50) is shown to be in intimate contact with heating elements (52) and surrounded by cooling chamber (54). The thickness of the wall structure is between about .0001 to .020 inch (.000254 to .0508 cm), typically about 0005 to .005 inch (.00127 to .0127 cm) and preferably about .001 to .003 inch (.00254 to .00762 cm). In order to achieve this thinness, the wall may be a film, sheet, or a molded, machined extruded or cast piece, or other convenient thin and flexible structures.

The material composing the wall may be a polyalcohol including polypropylene, polyethylene, polyester, and other polymers, laminates or homogenous polymers, metals or metal laminates, or other materials which may be thin, flexible, conformable and permit high heat transfer and preferably in the form of a film or sheet. Where the frame of the chamber which supports the walls is a particular material, such as polypropylene, the walls are preferably the same materials, such as polypropylene, so that the heat expansion and cooling rates of the walls are the same as the frame. Therefore, undue heat or cooling-induced stresses on the materials is minimized such that the sleeve walls maintain the same contact with the frame and wrinkling of the walls is avoided during multiple temperature cycling.

Although the flexible walls are preferred, the walls which contact the heating elements may also be rigid and flat to communicate with a rigid and flat heater. Whether rigid or flexible, the walls typically make up the major faces of the chamber to allow for maximum heat or cooling exposure to the chemicals contained therein. The chamber also has at least one minor face to a plurality of minor faces which provide a frame or support for the major faces.

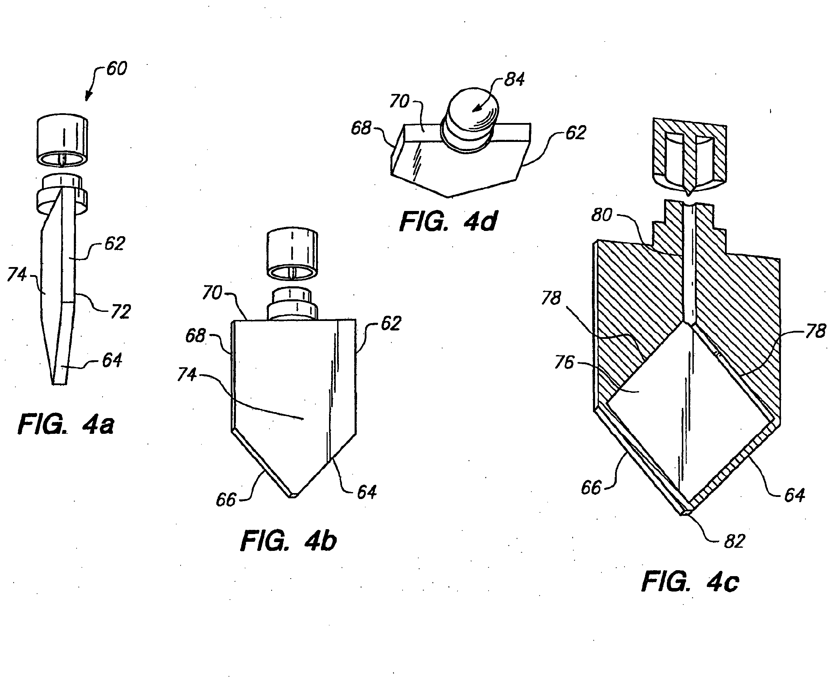

The major and minor faces of one sealed chamber is shown in the variously throughout Figures 4a, b, c, d with major and minor faces angled to optimize optical viewing. A plurality of minor faces, two of which are shown in the Figure 4a, minor faces (62), (64) couple two opposing major faces (72), (74) (only one major face is shown) together to form the chamber (60). Illustrated in Figure 4b, a major face (74) may be surrounded by five contiguous of minor faces (62), (64), (66), (68), (70).

In Figure 4b, angled minor faces (64), (66) are coupled together to form an angle on one end and to parallel minor faces (62), (68) on the other. The angled faces (64), (66) may define the bottom portion of the reservoir (76), and a back walls (78) may define the top portion of the reservoir (76) as depicted in the interior view of one chamber in Figure 4c wherein a sample channel (80) leads to the reservoir (76). The channel and reservoir including the backwalls is optionally an separate piece inserted into the main body of the chamber. The channel leading to the reservoir optionally serves a variety of functions including providing a conduit for filling the reservoir, such as bottom filling or an area to hold overfilled reagents and purged air.

The angled faces (64), (66) may be joined to form a "V" shaped point (82) (triangular), especially on the bottom of the chamber to allow for easier filling by reducing or eliminating bubble formation. Alternatively, the interface of the angled faces need not connect form a point but is separated by an intermediary portion, such as another minor face or various mechanical or fluidic features which do not significantly interfere with the thermal and optical performance of the chamber. For example, the angled faces may meet at a port which leads to another processing area in communication with the reaction chamber, such as an integrated capillary electrophoresis area.

The top minor face (70) may be coupled to the ends of the parallel faces (62), (68) as shown from the top view in Figure 4d. The top face (70) is also in contact with a port (not shown) for adding liquids and removing air. The port allows access of a pipette tip through a channel from the outside into the interior of the chamber, for example, to the bottom of the reservoir to enable bottom-up filling. The port may also permit other conventional methods of sample introduction, such as through an automated fluid injection system or through a fluidic manifold which optionally is an integral part of the chamber. The chamber may also be one aspect of a larger device which processes the fluid prior to the fluid flowing through the port and into the chamber. One example of a disposable fluidic cartridge is in copending patent application, U.S.S.N. 08/998,188, filed December 24, 1997.

The external terminus of the port is designed to be sealed, preferably by accepting a seal cap (84), for example, as shown in Figure 4d. The cap (84) provides a means for sealing the port after filling to provide a barrier between the thermally controlled interior reaction volume and the non-thermally controlled environment to inhibit contamination of the sample, to prevent evaporation of fluid during heating of the sample, and the like.

The seal may be a snap-on cap, a screwtop, or other specialized closure as needed for the selected analytical protocol. Such a cap may be composed of any convenient material such as polypropylene or an elastomer, such as Santoprene^{™} (trademark of Monsanto Corporation, located in San Louis. Missouri). The chamber may be further sealed from the exterior environment by the heating of plastic material on or composing the top minor face. Alternatively, the seal may be created by a drop of oil placed on top of an aqueous sample to prevent evaporation of the sample. A cap may also be a plug which is inserted into a channel in communication with the reservoir such that the plug creates an increase in pressure within the reservoir. The increased pressure may allow for a solution in the reservoir to remain in a liquid state without going into a gaseous state at certain high temperatures. This property is in accordance with the theoretical principle, PV=nRT, where P is pressure, V is volume, n is moles, R is a constant and T is temperature. The resulting increased pressure may also cause outward expansion of the flexible walls to force the walls against the external heating units creating a better contact between the walls and the heating elements.

The chamber may be configured to optimize the visualization of the reaction in the reservoir. To this end one, two or multiple, and typically two minor faces comprise the optical windows. Where two windows are present, one window serves as a light excitation entry port and the second for emitted light detection.

Both windows may serve for excitation and detection for two light paths wherein one light path light is radiated through one window and detected through the second window and in the second light path light is emitted through second window and detected through the first window. The window faces may be offset at an angle selected to maximize the detection process.

One chamber (90) associated with an external optics assembly (92) is shown in Figure 5. Associated optical system (92) is designed to illuminate one minor optical faces (94), (96) with optical excitation radiation by individual light source (98) and to detect light emitted from the reservoir contents and through the adjacent minor optical face with detector (102). In the alternative, both adjacent minor faces (94), (96) may receive radiation from a light source (98), (100) and observation by detectors (102), (104) is at the other respective adjacent face, where the excitation light which is radiated through each face is a different wavelength and light which is detected at each respective adjacent face is also a different wavelength. Exemplary paths of differing wavelengths of excitation and detection light are shown by arrows in Figure 5. The faces (94), (96) additionally have two lens (106) directly molded into the surfaces to direct the light.

Where excitation and detection occurs at different faces as in Figure 5, it is usually preferred that the optical faces are offset at an angle (A). The preferred angle is about 90°. A 90° angle between excitation and detection optical paths assures that a minimum amount of excitation radiation entering through one minor face will exist through the other detection minor face. Also the 90° permits a maximum amount of emitted radiation, *e.g*. fluorescence, to be collected through the detection window. In other embodiments, the angle between adjacent optical faces is larger or smaller than 90°, depending, *inter alia,* on the efficiency and sensitivity of the excitation and detection optics. For example, where a detection system effectively discriminates between excitation and emitted light, an angle of less than 90° between faces may be desired. Conversely, where a detection system fails to efficiently discriminate between excitation and emitted light, an angle greater than 90° may be of interest.

One to a plurality of light transmissive elements may be present on the angle forming minor faces. The optical elements may be designed, for example, to maximize the total volume of solution which is illuminated by an LED fluorescence excitation source, to focus an optical excitation source on a specific region of the reaction chamber, or to collect as much fluorescence signal from as large a fraction of the reaction chamber volume as possible. In addition, gratings for selecting specific wavelengths, filters for allowing only certain wavelengths to pass, and multiple lenses or filters optimized for multiple excitation sources or detectors may be used. The opposite face may be optimized to collect and focus the maximum percentage of emitted fluorescence signal from the solution to an array of photodetectors. Alternatively, the faces may be simple, clear, flat windows serving as optically transmissive windows. Other elements include colored lenses to provide filtering functions, retro-reflective surfaces, optical grating surfaces, etc.

Further to the reaction chamber, the major or minor faces may be adapted for additional optical interrogation. The surface may be coated or comprise materials such as liquid crystal for augmenting the absorption of certain wavelengths. The surfaces may be used to determine the temperature of the enclosed chemicals by detecting particular absorption bands which reflect temperature conditions.

Thin films of metals, polymers, and combinations of materials such as in laminates, not only can be employed in a reaction chamber for the structural and thermal properties, but for optical properties, as well. Thin films constitute material thickness ranging from a few angstroms to hundreds of microns in thickness, and are usually formed with a particular series of processes familiar to those in the art of vapor deposition, plasma deposition, magnetron and RF sputtering, laser ablation, etc.... For example, vapor-deposited thin films of silver can augment the detection and collection of raman (inelastic scattering of an optically excited source) spectra. This and other materials can be deposited on a variety of substrates (glass, plastic, silicon, metals, etc...) to be translucent (transmitting) in certain wavelengths at angles of incidence, and reflective in others. This is the basis of a lot of optical materials developments and devices such as dichroic beam splitters, dielectric band pass filters, neutral density filters, etc....

The use of these capabilities to manufacture films that can be attached to, used to hermetically seal reaction tubes, or are deposited directly onto the wall of a reaction tube that are being interrogated optically, can result in reaction tubes with specific optical emission and excitation properties. These thin films processes when used economically, can thereby be used to manufacture reaction tubes or vessels inexpensively resulting in disposable, tubes with fine-tuned optical properties.

The chamber may be fabricated in various ways. It may be molded in several pieces which are bonded together or injection molded in one piece. There are several advantages to the multi-piece design and manufacturing approach. One benefit is that very thin walls can be achieved where the walls can be consistently produced to be the same size and shape. Another benefit is that the optical features of the device are separated from the fluidic features such that both components can be independently designed and optimized. For example retro-reflective walls may be made on one or many sides of the reservoir to reflect light. A third advantage is that the primary optical component can be fabricated from a different material than the primary fluidic component. An additional benefit is that the major surfaces may be fabricated from a different material than some or all of the minor surfaces. For example, materials with optimal thermal characteristics may be different from those with optimal optical characteristics. In particular, the angled optical windows, with or without light components, could be molded from polycarbonate, which has good optical transparency, while the rest of the chamber could be molded from polypropylene, which is inexpensive and is known to be compatible with the sensitive PCR reaction. Both pieces can be bonded together in a secondary step. The optical window is press-fitted or bonded into an end of the chamber, preferably the bottom of the chamber.

In one method of fabricating a chamber where the major and minor faces are different materials, the minor faces of the frame is molded with a reservoir having open sides. The chamber frame is made by standard injection molding processes for thermal materials. After the frame is made, the major walls are produced by placing, and preferably stretching, the material over the reservoir area. The walls are then bonded to the frame. Where the walls are a film or sheet, the material may be attached by heat sealing, adhesive bonding, ultrasonic bonding, etc. over the reservoir of the chamber.

A chamber in which the major and minor faces are fabricated from the same material requires that the total surface area of the major surfaces be at least about twice that of the total surface area of the minor surfaces where thermal conductance ratio of 2:1 is desired. On the other hand, if the faces are made of different materials, it is possible to modify the geometry from that shown since major faces comprised of materials with high thermal conduction could be combined with minor faces of low thermal conduction. The faces may be fabricated from glass or polymers including polyacrylics, polyamides, polycarbonates, polyesters, and vinyl polymers, or any combination thereof. Polycarbonates are preferred for the optically transparent faces.

An insert separate from the main frame of the chamber may be placed inside of the chamber to define some of the reservoir or other internal features. The insert may fill the top of the chamber and provide some of the faces. The insert may be bonded or preferably press-fitted into the chamber. The insert may also provide the channel, port, and cap attachment means.

The shape of the chamber may differ according to the particular reaction being performed and the associated thermal transfer device. Furthermore, the relationship of the frame to the flexible walls may vary as long as the frame is coupled to the walls and the walls are accessible to contact and external thermal source. For example, the minor faces may surround the perimeter of the major faces, as describe above in Figures 4a-d, In the alternative, the minor faces may provide a box frame which supports a centrally suspended pouch which is comprised of the flexible major faces. The chamber may be sized, in particular in the reservoir region of the chamber, to contain volumes from nanoliters to milliliters, depending upon the desired use. Preferably, the volume of the chamber is from about 1 to about 1000 microliters, and typically fro about 1 to about 500 microliters, and more preferably from about 10 to about 100 microliters.

In summary of the reaction chamber, the various chambers described herein have the following characteristics: high surface-to-volume ratio for efficient heating/cooling; thin, low-mass walls; conformable walls to maximize association with heating and cooling system; moldable and bondable material where multiple pieces are required; features which accommodate high thermal expansion coefficients to minimize temperature-induced mechanical stress during heat exchanging operations; chemically inert materials so that there is no adsorption or reaction with reactants, intermediates, or products, no or minimal inactivation of enzymes by surface active means, and compatible with glycerol; windows with high optical clarity for efficient interrogation; long excitation optical path lengths; maximized offset between excitation and emission detection windows; no or minimal light coupling between excitation and detection devices; optical elements such as retro-reflective surfaces; major walls precisely mated with module heating/cooling surfaces; port for introducing sample and reagents; means to preclude or minimize refluxing during cycling; efficient removal of air during filling and capping; and sealing of the reaction mixture from external environment.

### Thermal Sleeve

The chamber is compatible with a thermal sleeve for heating or cooling the chamber reservoir. The thermal sleeve is designed to induce a temperature change in the chamber by making intimate contact with the chamber.

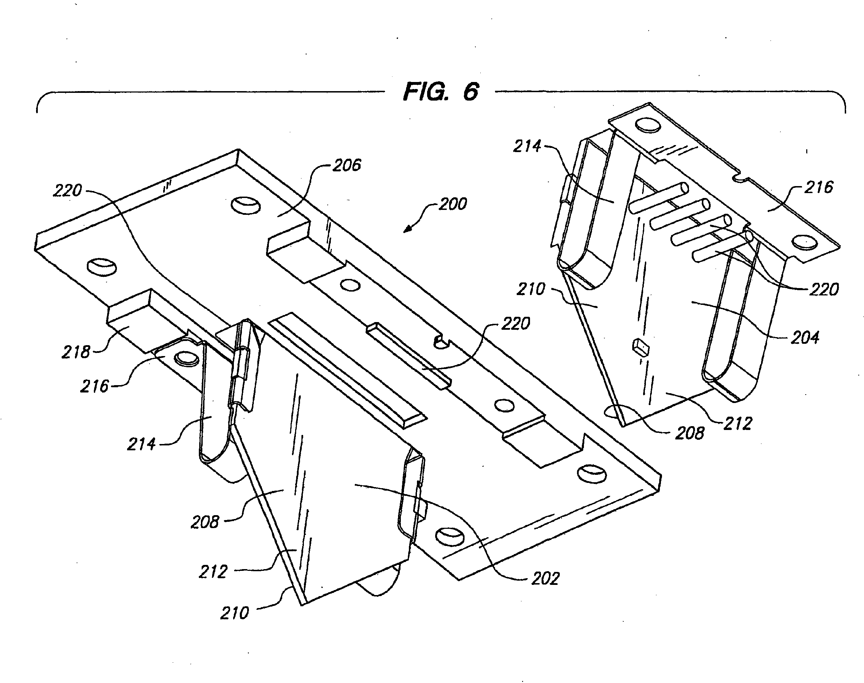

Figure 6 shows a perspective view of one thermal sleeve (200) with one heating or cooling plate (202) attached to a support bridge (206) and another plate (204) removed from the support (206). Each heating or cooling plates (202), (204) have one face being a contact surface (208) and another face being a biasing surface (210) with one end (212) of each plate being slanted towards each other. Further on each the biasing surface (210) is a spring (214) with an integral attachment arm (216) for coupling to support bridge (206) at securing region (218). The plate is partially inserted through bridge slots (220) and the plate attachment arm (216) is fastened to the bridge securing region (218). The biasing surfaces (210) of the plates also have a plurality of electrical connections (220) which may communicate with heating, cooling or electrical sources (not shown) or any combination thereof. When assembled, the plates are held in opposition by the support bridge to form an opening between the plates for enclosing a reaction chamber.

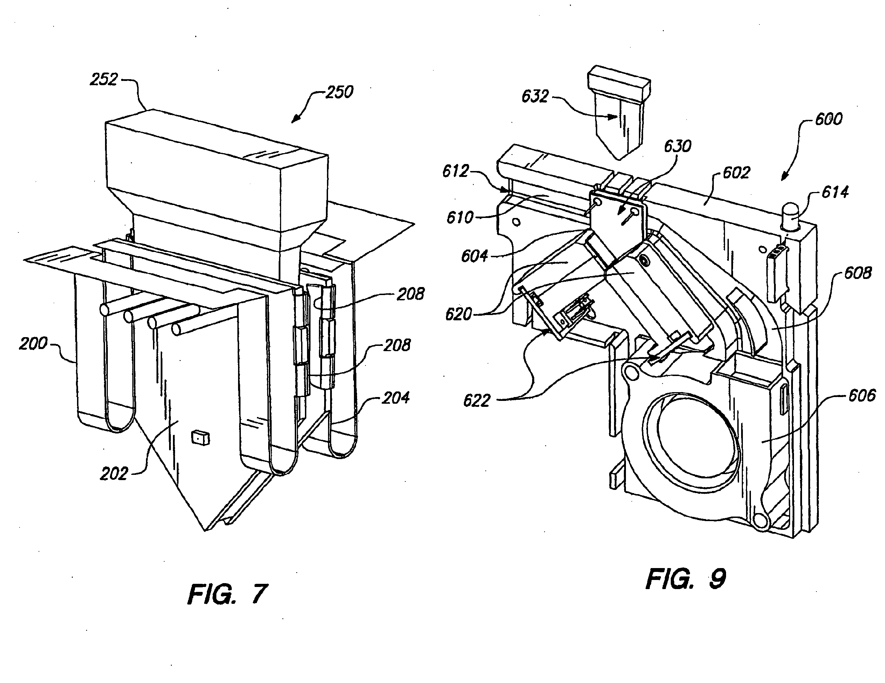

Figure 7 demonstrates how a chamber (252) may be enclosed within a thermal sleeve (200) (depicted in Figure 6), to form a heat exchanging module (250). The contact surface (208) of each plate (202), (204) are made to press against the chamber surfaces (not shown) in a manner that maximizes thermal contact. In general, the sleeve may consist of one or more, and preferably two, separate spring-loaded heater plates configured to mechanically bias against the surface, e.g. reservoir area, of the reaction chamber. Such a spring-loaded configuration would simplify mechanical tolerances between the various mechanical components, i.e. thermal sleeve, chamber and optical unit. Alternatively, the plates may be made to bias against a reaction chamber surface by mechanical force initiated by other parts or a mechanical motor, thermal expansion, pneumatic pressure, such as air flow pressure, hydraulic pressure, and the like. The interior of the heat exchanging sleeve may also be tapered to allow for a snug fit with the reaction chamber insert. Furthermore, the walls of the inserted chamber may be expanded to also press against the heater plate surface.

The shape of the sleeve is designed for optimal thermal contact with a reaction chamber. The opening in the sleeve for contacting the chamber surface may be elongated in the x-direction. Thus the opening is longer in the direction perpendicular to the length of a chamber. Preferably the shape of the opening is rectangular in cross section. The ratio of length to width of the surfaces defining the opening may be at least 2:1. Such elongation provides greater contact with an inserted chamber than prior designs where the opening for inserting a chamber is expanded in the z-direction and are typically round or octangular in shape to hold round tubes.

As described in this application, the achievement of rapid heat exchange (heating and/or cooling) from a sample in a reaction tube requires a low thermal-mass thermal sleeve assembly together with a thin, wide reaction tube. The fastest thermal cycling instruments to date (for example, the Light Cycler by Idaho Technologies and the MATCI by Lawrence Livermore National Labs) solve this problem by making the reaction tube a thin long cylinder, 1 mm in diameter or less. Other very fast thermal cycling instruments depend on very small liquid sample volumes, which are relatively easy to heat and cool very rapidly. However, these approaches are only suitable for very small liquid sample volumes (both the Light Cycler and the MATCI are designed for only 10-20 µL). In contrast, the tube described here is thin and wide. Instead of increasing the volume capacity by simply making the reaction tube longer, this application teaches that large heating and cooling rates can also be achieved by properly designed reaction tubes which are, instead, thin and wide. The counterpart and complementary design of the low-mass thermal sleeve assures that the entire assembly, including the relatively large liquid sample volumes (up to and over 100 µL), can be controllably heated and cooled at the maximum rates.

The thermal plates may be made of various materials. In order to ensure that the inside of the heat exchanging sleeve is resistant to bleach and other cleaning solutions, the interior may be coated or lined with a chemically inert material, such as a polytetrafluoroethylene, or the entire sleeve may be fabricated from a chemically stable material, such as a ceramic or metals such as aluminum nitride, aluminum oxide, beryllium oxide, and silicon nitride. Other materials which may be utilized include, e.g., gallium arsenide, silicon, silicon nitride, silicon dioxide, quartz, glass, diamond, polyacrylics, polyamides, polycarbonates, polyesters, polyimides, vinyl polymers, and halogenated vinyl polymers, such as polytetrafluoroethylenes. Other possible materials include thermocouple materials such as chrome/aluminum, superalloys, zircaloy, aluminum, steel, gold, silver, copper, tungsten, molybdenum, tantalum, brass, sapphire, or any of the numerous ceramics, metals, and synthetic polymeric materials available in the art. A ceramic inside surface is preferred because the surface may be conveniently machined to very high smoothness for high wear resistance, high chemical resistance, and good thermal contact to reaction chamber inserts. Ceramic chambers can also be made very thin (between 0.025-0.050 mm) for low thermal mass. A heat exchanging chamber made from aluminum or copper also has high thermal conduction, but a larger thermal mass.

The heating source, such as heating resistors, may be directly screen printed onto a plate, particularly plates consisting of ceramic insulating materials, such as aluminum nitride and aluminum oxide. Screen printing provides high reliability and low cross-section for efficient transfer of heat into the chamber itself. The heating source may be integral with the plates by the baking the element inside of the ceramic unit. Also, thick or thin film resistors of varying geometric patterns may be integrated into the thermal jacket walls to provide more uniform heating, for example by having thicker resistors at the extremities and thinner resistors in the middle. Heating elements may consist of carbide, tungsten, silver, or other materials which heat when a voltage is applied to the material. One way of heating a metal sleeve is by using a laminated heater source such as an etched-foil heating element (Minco Products, located in Minneapolis, MN) attached to the surface of the heating plates. Optionally, cooling fins, of the same or different material as the body of the chamber, may be brazed, soldered, or epoxied directly over the screen-printed resistors.

The function of the support bridge, shown in Figure 6 and described above, is to serve as a support for one or more thermal sleeve heating or cooling elements and to provide a guide for inserting the reaction chamber into the main body of the thermal sleeve. The support may include a slot for inserting the chamber between thermal plates. The slot may incorporate mechanical features or a sealing surface which allow a tight mechanical seal.

A consideration in the choice of material for the top support is that its thermal expansion coefficient (TCE) match that of the thermal plate as closely as possible. The materials of construction recited above for the plate are also useful for the support. Appropriate combinations will be apparent to the skilled artisan. Where the thermal plates are made of ceramic, the preferred material for the top is also ceramic. If the plate is aluminum, the support will likewise be aluminum.

The mechanical transition between the thermal sleeve plate and top support is a critical joint. The heating or cooling plate may be cycled many times (up to 400,000 over a 5 year life) e.g. in PCR applications between about room temperature, 60°C and 95°C, while the top support may be maintained at a relatively constant temperature. Thermal gradients and stresses are high in this region. Flexible, chemical-resistant adhesives and gasket materials may be used to ensure bonding. Preferred adhesives are epoxy, but a more robust metal sealing technique can be used if the thermal plate is metal or ceramic.

Another criteria for the transition region is that the sealing or bonding material and the method for joining the top support to the thermal plate should be resistant to bleaches and other cleaning solutions. It is expected that up to 1000 exposures to cleaning solutions such as 10% bleach and 1% Tween 20 may occur.

The thermal sleeve described herein has high thermal conduction and low thermal mass to permit rapid heating and cooling. Further, the thermal sleeve is sufficiently durable for repetitive use (as many as 10,000 reaction chamber insertions). The heating elements are integrated into the sleeve to assure rapid, efficient heating. To maximize cooling efficiency, cooling element may also be attached to the surface such as cooing fins or thermally conductive elements connected to a secondary cooling source. For example, the sleeve may be thermally connected to a Peltier element or to a heat pipe.

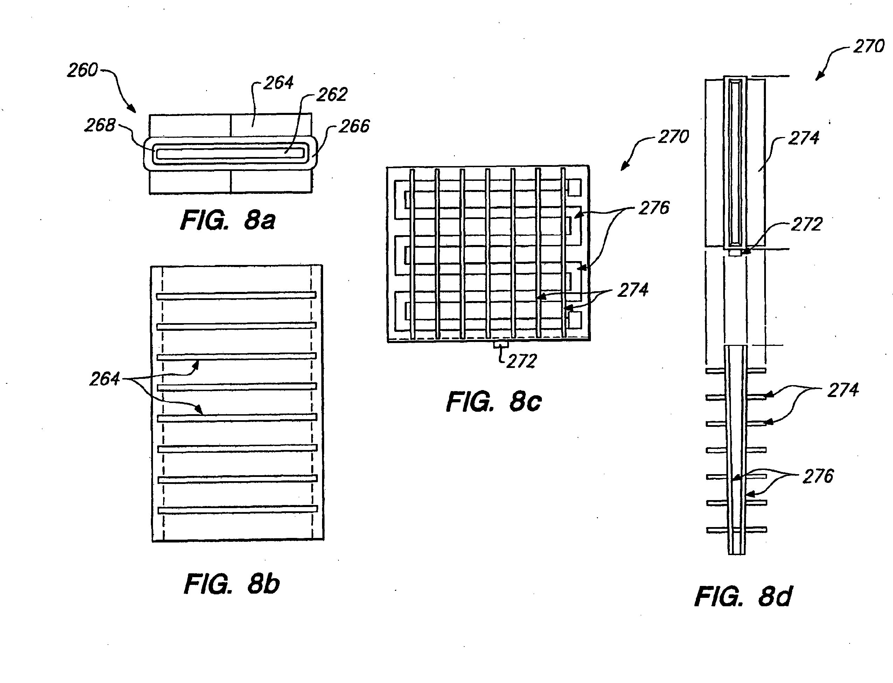

Figure 8a, b, c, d illustrates exemplary variations of heating and cooling configurations of a thermal sleeve. Figure 8a is a top view which looks directly down into the mouth (262) of the sleeve (260). The sleeve is provided with cooling fins (264) and integrated heaters (266). In Figure 8a, the sleeve is provided with a thin interior liner (268). Figure 8b is a front view of the cooling fins (264) shown in Figure 8a. Figure 8c is a front view of another sleeve (270) with heating (276) and cooling elements (274). A proportional-to-absolute zero (PTAT) temperature sensor is shown at (272). Figure 8d is a side view of the sleeve (270) shown in Figure 8c. In the side views of Figure 8d, screen printed or laminated heating elements (276) are shown beneath the cooling fins (274).

The temperatures of an inserted chamber and/ or thermal plates may be monitored by one or more sensor located on the thermal sleeve. In order to achieve the desired 0.5-1.0 °C temperature accuracy, silicon-based, proportional-to-absolute zero (PTAT) thermal sensors may be used. The output of the sensors is linearly proportional to temperature. High precision PTAT temperature sensors can be very small, e.g. 0.5x0.5x1.0 mm. Alternatively, thermistors, thermocouplers and resistance temperature detectors (RTD), especially RTD's made from platinum, copper, nickel and nickel-iron may be used. These sensors are easily affixed to the trailing edge of the heat exchanging reaction chamber.

The thermal sleeve is also adapted for optical interrogation of the contents in situ by the provision of optically transmissive elements on the sleeve and may incorporate various features, such as lenses and filters, to facilitate optical visualization. For example, at least two surfaces of the sleeve may be optically transmissive, preferably forming the bottom of the sleeve adjacent to the optical windows of an inserted reaction chamber. An important criteria for the window material is transparency or translucency of the window. The window may also simply be an opening in the sleeve through which the chamber may be viewed. The jacket may be open at the bottom so that a portion of an inserted chamber may extend below the sleeve for direct optical interrogation. Where the window is a particular material, it is preferred that the window be as close a match as possible between the coefficients of thermal expansion (TCE) of the sleeve and the window. For example, a glass having a TCE closely matches that of a ceramic sleeve may be chosen. A plastic window is more suitable if the thermal sleeve is metal. It is also critical that the window material be stable to bleach and other cleaning solutions. In particular, it is envisioned that the inside of the thermal jacket will be periodically cleaned by pipetting in dilute bleach solutions, followed by water, followed by an alcohol dry. These solutions will be in direct contact with the joint between the optical window and the heat exchanger. This transition also significantly affects illumination and light-gathering functions of the device.

The mechanical transition between window and thermal elements is a critical joint. It is desirable to maintain the optics package at a relatively low temperature, or at least constant temperature, while the thermal sleeve is temperature cycled many times. Thermal gradients and stresses are high in this region. Another criteria for the transition region is that whatever sealing or bonding material and method for joining the optical window to the thermal sleeve is used should be resistant to bleaches and other cleaning solutions. In particular, it is envisioned that the inside of the thermal sleeve will be periodically cleaned by pipetting in dilute bleach solutions, followed by water, followed by an alcohol dry. These solutions will be in direct contact with the joint between the optical window and the thermal sleeve. This transition also significantly effects illumination and light-gathering functions of the device.

### Controlled Heat Exchanging Instrument

The optics assembly may be fabricated in an instrument which is configured to accept a thermal sleeve. Such an instrument may additionally have systems for maintaining the environmental temperatures, such as a cooling system, and various control mechanisms to regulate the operations being performed within the heat exchanging chamber.

In Figure 9, the instrument (600) is shown with housing (602) and associated operational elements. A processing area (604) is adapted to accept a thermal sleeve (630) and heat exchanging chamber (632) described *supra.* The processing area (604) is in pneumatic communication with cooling fan (606) by inlet channel (608) and with outlet channel (610) leading from the processing area to an outlet port (612). When a chamber (632) is inserted into processing area (604), the chamber reservoir is exposed to the cooling air circulating from fan to inlet channel (608), to processing area (604). Thereafter, the air travels through outlet channel (610) to exit the housing at port (612). In addition, an inserted chamber is in optical communication with optics assembly (620) including optics emission blocks and optics detection blocks coupled to circuit boards (622) for controlling the optics. The instrument also includes sensor (614) to monitor optics, heating or cooling operations.

The optical assembly consists of lensing elements, such as light collimating, *i.e*. light-pipe, and focussing elements, with transmissive and reflective filters, gratings, photodiodes, fresnel lens and the like, as needed, which may be attached to a circuit board which may contain LEDs and photodetectors. The tensing components may be injection molded from a transparent plastic such as polycarbonate or other moldable, optically clear plastic or glass. The lensing elements connect the reaction chamber windows to the excitation and detection optical components, as described below. The lensing elements incorporate and interface with filters and with the optical excitation and detection circuit board which contains the solid-state LEDs and photodetectors.

Solid-state LED's and photodetectors are optionally assembled onto a small circuit board located below the lensing components. This is a simple board, fitted with alignment features to accurately position the excitation sources and detectors with respect to the lensing elements and the reaction tube. An edge-connector or flex-connector provides electrical connection between the optical board and the adjacent controller board.

The housing may be machined from aluminum and anodized, molded from a rigid, high-performance plastic, or other conventional techniques and materials. The primary functions of the housing are to provide a frame for holding the thermal sleeve and top support, and optical assembly and to provide flow channels and ports for directing cooling fluid, *e.g.*air and efficiently guiding the fluid flow across the surface of the thermal sleeve/chamber.

A cooling source, such as gas diffusing plates or other air flow distributing structures for assuring uniform air flow around the thermal sleeve, a fan for blowing cool air over the sleeve, a Peltier device, liquid cooling such as water or a compressed gas cooling source, or the like. The cooling element may be directly formed in the housing or be fabricated independently from the housing and assembled into the housing at a later time. For example, each thermal sleeve in an array of heat exchanging assemblies may communicate with a cooling element. In addition, ports located in the housing may provide coolant air inlet and outlet ports. The ports may also be sealed to a base-plate using suitable sealants where the ports interface with inlet and outlet ports in base plate.

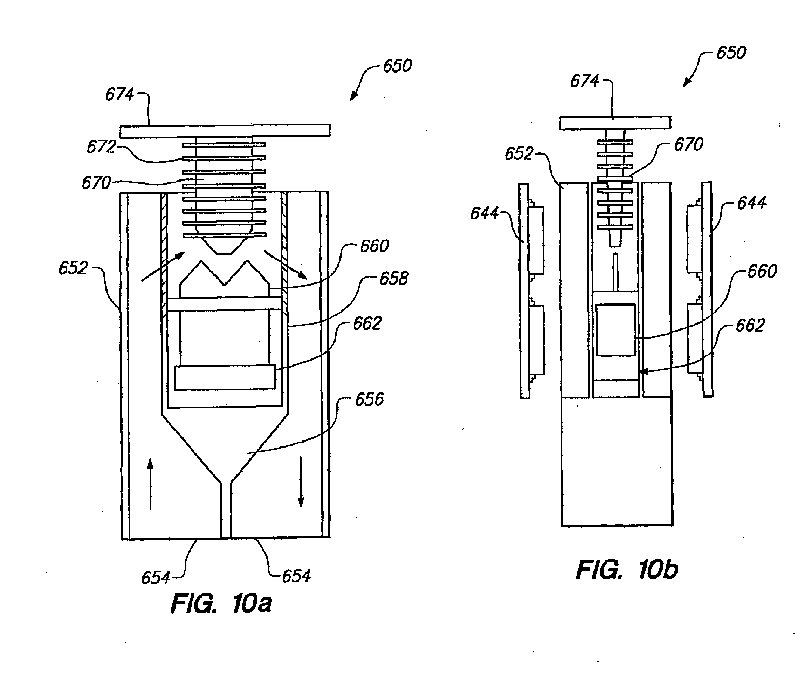

Further to the instrument, an alternative embodiment is shown in Figures 10a and 10b. The instrument (650) has thermal sleeve (670) (shown partially exploded from the instrument) with sleeve plates (672), which are attached to a top support (674) for mating with the instrument housing (652). Housing (652) has air inlet and outlet port (654), a support (656) with air diffusing plates (658) and an optics module (660) with attached circuit board (662). The direction of cooling air flow is shown by the arrows.

The entire electronic control of each heat exchanging assembly may be incorporated into one or two circuit boards or chips attached to the sides of the housing. In the cross-sectional view of the instrument shown in Figure 10b, the thermal sleeve (670) with top support (674) is shown partially exploded out of the housing (652) having optics module (660), and optics circuit board (662) which interfaces with a pair of controller boards (664). The circuit board (662) and controller boards (664) may be fabricated using high reliability, low-profile surface-mount technology. The controller board (664) communicate with the optical board through a slot in the housing and a 90° electrical connector where the bottom end of the circuit board plugs into an electrical socket on the base-plate for electrical communication to the controller board.

Moreover, multiple assembly units may be grouped together, as in conventional reaction apparatus, such as PCR, for exposing the multiple samples to the same temperature profile, in which case only one unit need be equipped with electrical control circuitry. However, when it is desired to react multiple samples using independent conditions, then independent control of each unit or grouping of unit is needed.

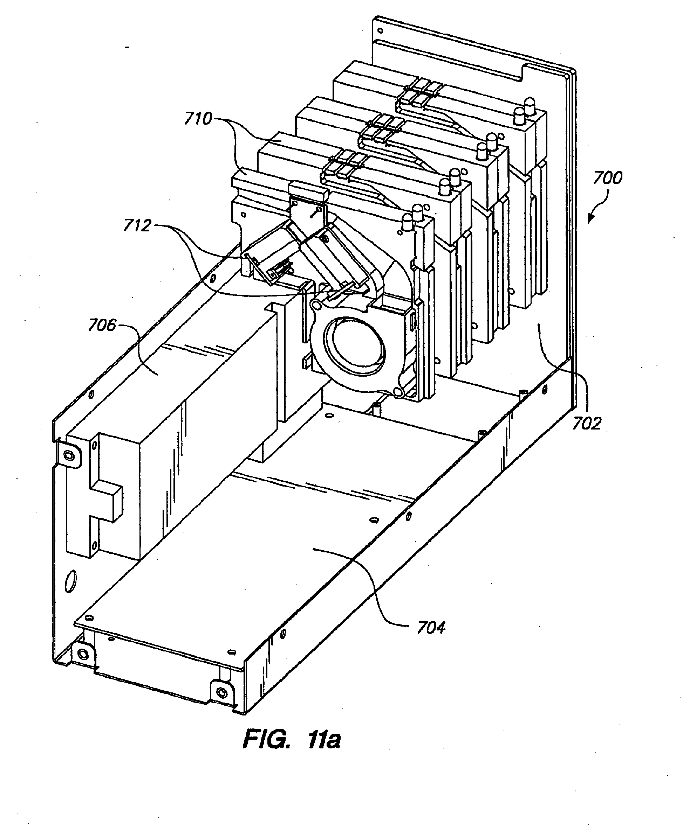

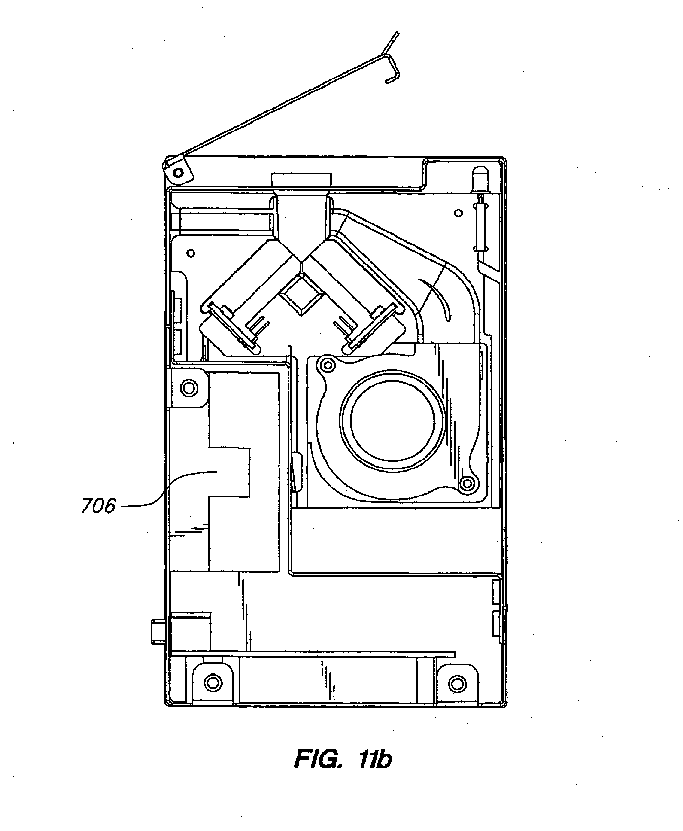

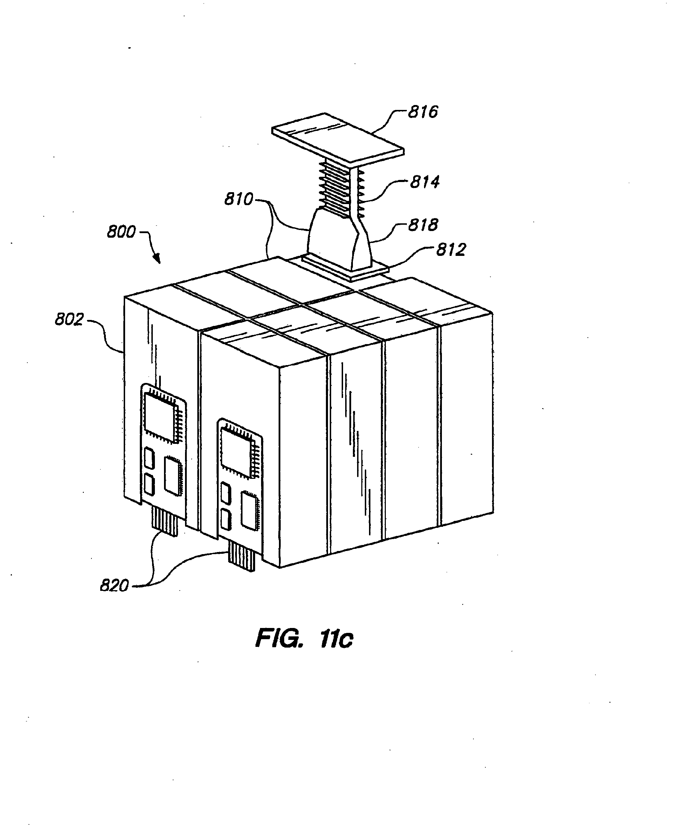

In Figures 11a and 11b, a cluster of heat exchanging assembly units are arranged in an array. Figure 11a shows a heat exchanging system (700) with four assembly units (710), one of which are shown with a side panel removed to expose the internal unit on base support (702). Figure 11c shows another embodiment of a heat exchanging system (800) with eight units (810) arranged on base support (802). In Figure 11a and in the cross-sectional view shown in Figure 11b, each unit has optics circuit board (712) which interfaces with the "mother" command unit (704), e.g. a common controller board. The single controller board has several, e.g. four, circuit boards (not shown) such that the "mother" processor board (704) controls the cluster of units. The system power converter (706) supplies power to the units. Alternatively, as shown in Figure 11c, the optics circuit board (812) of each unit (810) interfaces with an individual controller board (820) so that each unit has its own controller board. In Figure 11c a thermal sleeve (814) with top support (816), optics assembly (818) and optical circuit board (812) are shown removed from the base (802).

In an array format, the gap between the units may be sealed by a gasketed plate covering the entire array. The top support and the gasketed plate may be configured to form a flush surface for a multi-unit array. The gasket material is preferably resistant to bleach and other cleaning solutions.

The base plate (802) in the array of assembly units may provide several functions. For example, the base may allow for physical mounting of the units, housing of a controller board, and electrical connection between the heat exchanging assembly units and the host computer. A multi-function electrical connector may also serve as the physical mount.

The footprint of the controlled heat exchanging unit is designed to be easily assembled into 2-dimensional arrays. In addition, the close spacing in one direction allows the use of linked linear arrays of units, if desired. For example :, the overall dimensions of each assembly unit may be approximately 9 x 40 x 50 mm. The narrow dimension is small enough to allow, for example, 8 units to be grouped together, if desired, in a reasonable (72 mm) length, suitable for interfacing with standard commercially available multi-pipettes which have 9 mm center-to-center spacing for convenient loading of sample and chemicals, if needed.

The thermal reaction assembly, according to the invention, may find use in many applications. The apparatus of the invention is utilized to perform chemical reactions on a sample, for example, polymerase chain reaction (PCR). The unit is provided, either directly or within a separate, insertable reaction chamber, with reagents required for the reaction. For example, in performing a polymerase chain reaction, the chamber may include a sample polynucleotide, a polymerase such as Taq polymerase, nucleoside triphosphates, a first primer hybridizable with the sample polynucleotide, and a second primer hybridizable with a sequence complementary to the polynucleotide. Some or all of the required reagents may be present in the reaction chamber as shipped, or they may be added to the sample and then delivered through an inlet port to the reaction chamber, or the reagents may be delivered to the reaction chamber independently of the sample. The polymerase chain reaction may be performed, according to methods well known in the art.

Although polynucleotide amplification by polymerase chain reaction has been described herein, it will be appreciated by persons skilled in the art that the devices and methods described herein may be utilized equally effectively for a variety of other polynucleotide amplification reactions and ligand-binding assays. Such additional reactions may be thermally cycled, such as the polymerase chain reaction, or they may be carried out at a single temperature, e.g. nucleic acid sequenced-based amplification (NASBA). Moreover, such reactions may employ a wide variety of amplification reagents and enzymes, including DNA ligase, T7 RNA polymerase and/or reverse transcriptase, among others. Additionally, denaturation of polynucleotides can be accomplished by known chemical or physical methods, alone or combined with thermal change. Polynucleotide amplification reactions that may be practiced in the device of the invention include, but are not limited to: (1) target polynucleotide amplification methods such as self-sustained sequence replication (3SR) and strand-displacement amplification (SDA): (2) methods based on amplification of a signal attached to the target polynucleotide, such as "branched chain" DNA amplification; (3) methods based on amplification of probe DNA, such as ligase chain reaction (LCR) and QB replicase amplification (QBR); (4) transcription-based methods, such as ligation activated transcription (LAT) and nucleic acid sequence-based amplification (NASBA); and (5) various other amplification methods, such as repair chain reaction (RCR) and cycling probe reaction (CPR).

In addition to the aforementioned gene or target amplification methods, other chemical or biochemical reaction applications are anticipated. For example, temperature controlled lysis of cells is another application of the intended invention, which may or may not compliment gene or target amplification methods described above.. In many cases, this is accomplished by raising the temperature of the solution containing the cell to 37°C for a few minutes to allow the action of proteolytic enzymes followed by raising the temperature and holding at 95°C. After a few seconds to minutes, the cell is lysed and the target component, such as nucleic acid, is released which can then be further processe, *e.g.* amplified, without further manipulation. In other applications, it may be desired to immediately stop any further chemical reactions immediately after the lysis by lowering the temperature to 0° to 4°C, such as in the case when studying the mRNA expression state using rapid thermal polymerase chain reaction (RT-PCR). Thus the rapid thermal ramping as provided by this device enables such functionality.

Furthermore, the disclosed device can be utilized to control and interrogate chemical reactions. In enzyme kinetic studies, for example, it is advantageous to hold the test reaction mixture at a reduced temperature, such as 0°C - 4°C, before starting the reaction, and then to quickly bring the reaction mixture from this reduced hold temperature, *e.g*. 4°C, to an optimal reaction temperature. Unwanted side reactions occurring at intermediate temperatures and are reduced or eliminated, allowing for more accurate measurements and higher purity of product. Moreover, this approach can be extended to more complex chemical and biochemical reactions that can be controlled and studied by enabling changes to multiple different temperatures, or to periodically reduce the temperature to stop the reactions.

Such temperature control can be exploited for ligand binding reactions such as fluorescence homogenous immunoassays. Because the reaction start event can be precisely executed and the subsequent reaction hold temperature accurately controlled without thermal gradients, better assay performance may be achieved.

## Claims

1. A reaction vessel (46, 50, 60, 90) comprising:
a) two opposing major walls (18, 48, 72, 74), wherein at least one of the major walls comprises a sheet or film;
b) a plurality of contiguous minor walls (16, 62, 64, 66, 68, 70, 94, 96) joining the major walls to each other to form a reaction chamber (10); and
c) a port for introducing fluid into the chamber, **characterised in that** two of the minor walls are light transmissive to provide respective optical windows to the chamber and the ratio of thermal conductance of the major walls to that of the minor walls is at least 2:1.

2. The vessel of claim 1, wherein the sheet or film has a thickness of about 0.0001 (0.000254 cm) to about 0.02 (0.0508 cm) inches and is sufficiently flexible to conform to a heating or cooling surface.

3. The vessel of claim 2, where each of the two opposing major walls of the chamber comprises a sheet or film, each of the sheets or films being sufficiently flexible to conform to a respective heating surface.

4. The vessel of any one of claims 1 to 3, wherein each of the sheets or films comprise a polymeric material.

5. The vessel of claim 1, wherein each of the light transmissive walls serves for excitation and detection for two light paths, the first light path radiated through a first optical window and detected through a second optical window and the second light path radiated through the second optical window and detected through the first optical window, the light transmissive walls are being angularly offset from each other to maximize the detection process.

6. The vessel of claim 5, wherein the light transmissive walls are angularly offset from each other by about 90 °.

7. The vessel of any one of claims 1 to 6, further comprising a sealing means (12, 84) for sealing the port.

8. The vessel of any one of claims 1 to 7, further comprising a channel connecting the port to the chamber.

9. The vessel of any one of claim 8, further comprising a plug that is insertable into the channel to increase pressure in the chamber.

10. The vessel of any one of claims 1 to 9, comprising at least four minor walls, at least two of the minor walls being the light transmissive walls, and at least two other of the minor walls being retro-reflective walls for reflecting light in the chamber.

11. The vessel of any one of claims 1 to 10, further comprising optical elements or coatings on the light transmissive walls for allowing only certain wavelengths of light to pass through the walls.

12. The vessel of any one of claims 1 to 11, wherein each of the light transmissive walls has a lens molded into its surface.

13. The vessel of any one of claims 1 to 12, further comprising at least one reagent in the chamber.

14. The vessel of any one of claims 1 to 13, wherein the ratio of the total surface area of the major walls to that of the minor walls is at least 2:1.

## Patentansprüche

1. Reaktionsgefäß (46, 50, 60, 90), das Folgendes umfasst:
a) zwei gegenüberliegende Hauptwände (18, 48, 72, 74), wobei zumindest eine der Hauptwände eine Folie oder einen Film umfasst;
b) eine Vielzahl aneinander angrenzender Nebenwände (16, 62, 64, 66, 68, 70, 94, 96), die die Hauptwände miteinander verbinden, um eine Reaktionskammer (10) zu bilden, und
c) eine Öffnung zum Einbringen von Fluid in die Kammer, **dadurch gekennzeichnet, dass** zwei der Nebenwände lichtdurchlässig sind, um jeweils optische Fenster in die Kammer bereitzustellen, und dass das Verhältnis der Wärmeleitfähigkeit der Hauptwände zu jener der Nebenwände zumindest 2:1 beträgt.

2. Gefäß nach Anspruch 1, worin die Folie oder der Film eine Dicke von etwa 0,0001 Zoll (0,000254 cm) bis etwa 0,02 Zoll (0,0508 cm) aufweist und ausreichend flexibel ist, um sich an eine Heiz- oder Kühlfläche anzupassen.

3. Gefäß nach Anspruch 2, worin jede der beiden gegenüberliegenden Hauptwände der Kammer eine Folie oder einen Film umfasst, wobei jede der Folien oder jeder der Filme ausreichend flexibel ist, um sich an eine entsprechende Heizfläche anzupassen.

4. Gefäß nach einem der Ansprüche 1 bis 3, worin jede der Folien oder jeder der Filme ein Polymermaterial umfasst.

5. Gefäß nach Anspruch 1, worin jede der lichtdurchlässigen Wände zur Anregung und Detektion von zwei Lichtwegen dient, wobei sich der erste Lichtweg strahlenförmig durch ein erstes optisches Fenster erstreckt und durch ein zweites optisches Fenster detektiert wird und sich der zweite Lichtweg strahlenförmig durch das zweite optische Fenster erstreckt und durch das erste optische Fenster detektiert wird, wobei die lichtdurchlässigen Wände in Bezug aufeinander in einem Winkel versetzt sind, um den Detektionsprozess zu maximieren.

6. Gefäß nach Anspruch 5, worin die lichtdurchlässigen Wände in Bezug aufeinander in einem Winkel von etwa 90° versetzt sind.

7. Gefäß nach einem der Ansprüche 1 bis 6, das ferner ein Dichtungsmittel (12, 84) zum Abdichten der Öffnung umfasst.

8. Gefäß nach einem der Ansprüche 1 bis 7, das ferner einen Kanal umfasst, der die Öffnung mit der Kammer verbindet.

9. Gefäß nach Anspruch 8, das ferner einen Stopfen umfasst, der in den Kanal einführbar ist, um den Druck in der Kammer zu erhöhen.

10. Gefäß nach einem der Ansprüche 1 bis 9, das zumindest vier Nebenwände umfasst, wobei zumindest zwei der Nebenwände lichtdurchlässige Wände sind und zumindest zwei andere der Nebenwände rückstrahlende Wände sind, um Licht in der Kammer zu reflektieren.

11. Gefäß nach einem der Ansprüche 1 bis 10, das ferner optische Elemente oder Beschichtungen auf den lichtdurchlässigen Wänden umfasst, um nur bestimmte Lichtwellenlängen die Wände passieren zu lassen.

12. Gefäß nach einem der Ansprüche 1 bis 11, worin jede der lichtdurchlässigen Wände eine in ihre Oberfläche eingeformte Linse aufweist.

13. Gefäß nach einem der Ansprüche 1 bis 12, das ferner zumindest ein Reagens in der Kammer umfasst.

14. Gefäß nach einem der Ansprüche 1 bis 13, worin das Verhältnis der Gesamtoberfläche der Hauptwände zu jener der Nebenwände zumindest 2:1 beträgt.

## Revendications

1. Cuve de réaction (46, 50, 60, 90) comprenant :
a) deux parois principales opposées (18, 48, 72, 74), au moins l'une des parois principales comprenant une feuille ou un film ;
b) une pluralité de parois secondaires contiguës (16, 62, 64, 66, 68, 70, 94, 96) joignant les parois principales les unes aux autres pour former une chambre de réaction (10) ; et
c) un orifice pour introduire du fluide dans la chambre, **caractérisée en ce que** deux des parois secondaires sont transmetteurs de lumière pour fournir des fenêtres optiques respectives à la chambre, et le rapport de la conductance thermique des parois principales sur celle des parois secondaires est d'au moins 2:1.

2. Cuve selon la revendication 1, dans laquelle la feuille ou le film a une épaisseur d'environ 0,0001 pouce (0,000254 cm) sur environ 0,02 pouce (0,0508 cm) et est suffisamment flexible pour se conformer à une surface chauffante ou refroidissante.

3. Cuve selon la revendication 2, où chacune des deux parois principales opposées de la chambre comprend une feuille ou un film, chacun(e) des feuilles ou des films étant suffisamment flexible pour se conformer à une surface chauffante respective.

4. Cuve selon l'une quelconque des revendications 1 à 3, dans laquelle chacun(e) des feuilles ou des films comprend un matériau polymère.

5. Cuve selon la revendication 1, dans laquelle chacune des parois transmettant la lumière sert à l'excitation et à la détection de deux trajets lumineux, le premier trajet lumineux étant rayonné à travers une première fenêtre optique et étant détecté à travers une seconde fenêtre optique et le second trajet lumineux étant rayonné à travers la seconde fenêtre optique et étant détecté à travers la première fenêtre optique, les parois transmettant la lumière étant décalées angulairement les unes par rapport aux autres pour optimiser le procédé de détection.

6. Cuve selon la revendication 5, dans laquelle les parois transmettant la lumière sont décalées angulairement les unes par rapport aux autres d'environ 90°.

7. Cuve selon l'une quelconque des revendications 1 à 6, comprenant en outre des moyens de scellage (12, 84) pour sceller l'orifice.

8. Cuve selon l'une quelconque des revendications 1 à 7, comprenant en outre un canal reliant l'orifice à la chambre.

9. Cuve selon l'une quelconque des revendications 1 à 8, comprenant en outre un bouchon qui est insérable dans le canal pour augmenter la pression dans la chambre.

10. Cuve selon l'une quelconque des revendications 1 à 9, comprenant au moins quatre parois secondaires, au moins deux des parois secondaires étant les parois transmettant la lumière, et au moins deux autres des parois secondaires étant des parois rétro-réfléchissantes pour réfléchir la lumière dans la chambre.

11. Cuve selon l'une quelconque des revendications 1 à 10, comprenant en outre des éléments ou des revêtements optiques sur les parois transmettant la lumière pour permettre uniquement à certaines longueurs d'onde de lumière de traverser les parois.

12. Cuve selon l'une quelconque des revendications 1 à 11, dans laquelle chacune des parois transmettant la lumière a une lentille moulée dans sa surface.

13. Cuve selon l'une quelconque des revendications 1 à 12, comprenant en outre au moins un réactif dans la chambre.

14. Cuve selon l'une quelconque des revendications 1 à 13, dans laquelle le rapport de la surface totale des parois principales sur celle des parois secondaires est d'au moins 2:1.
